# EUROPEAN PATENT APPLICATION

(11) **EP 1 244 228 A2**
(43) Date of publication of application: **25.09.2002**
(21) Application number: 02006480.4
(22) Date of filing: 22.03.2002
(51) Int. Cl.: H04B 7/185

(54) **Satellite communication system uplink power control**

(30) Priority: 23.03.2001 US 815529
(71) Applicant: TRW INC., Redondo Beach, CA 90278 (US)
(72) Inventor: Nivens, Dennis A., Hermosa Beach, CA 90254 (US); Wright, David A., Hermosa Beach, CA 90254 (US)
(74) Representative: Schmidt, Steffen J., Dipl.-Ing.

(57) **Abstract**

A comprehensive system and method for uplink power control in a satellite communication system is provided. The energy of uplink signals received by a satellite from a terminal is compared to an energy threshold. The reference power level of the uplink signals is then adjusted based on the comparison of the received energy with the threshold. Preferably, the energy comparison is accomplished using synchronization bursts. Threshold leveling is then used to determine adjustments to the thresholds used in the energy comparison and the power offsets used in determining the transmission power for uplink signals. If the error rate is derived from the same type of digital coding used for transmitting synchronization bursts, the power threshold is adjusted. If the error rate is derived from a different type of digital coding than is used for transmitting synchronization bursts, a power offset is adjusted.

## Description

### BACKGROUND OF THE INVENTION

The present invention generally relates to satellite communication systems. In particular, the present invention relates to controlling the uplink power in a satellite communication system.

Satellites have long been used to provide communication services to large regions of the globe. Historically, communication satellites have used frequencies in the range of 3 to 12 GHz (C or Ku band) to produce an antenna beam which covers a large portion of a continent. Modern satellites may operate at frequencies of 20 to 30 GHz (Ka band) to produce a beam which may cover an area (or "cell") with a diameter of 300 to 400 miles. Many such cells may be needed to provide communications to a region which previously may have been serviced by a single antenna beam. A modern cellular communication satellite may employ many antennas to generate a large number of beams used for transmitting downlink signals to, and receiving uplink signals from, various User Earth Terminals (UET) distributed over the surface of the earth.

In order for communication to occur on the uplink, signals generated by the UET must be of sufficient power to be received by the satellite. Thus, the antenna gain of the satellite's uplink antenna coupled with the transmission power of the UETs must be sufficient to allow communication to occur. Typically, communication satellite systems are designed with a predetermined, fixed satellite uplink antenna gain. Thus, the transmission power of the UET is typically controlled to enable and ensure communication.

In practice, several factors exists which may negatively impact the uplink communication channel. That is, certain undesired influences may cause the actual antenna gain to vary from the predetermined, designed antenna gain or may cause attenuation of, or interference with, a signal transmitted by a UET. For example, antenna gain may be affected by gain roll-off which may cause the antenna gain to vary spatially over the cell or, alternatively, antenna gain may vary over the cell as a result of pointing errors in the antenna. Atmospheric attenuation, also known as "rain loss," or interference among several UETs, also known as Co-Channel Interference (CCI), may also affect the quality of a signal transmitted from a UET. Each of these conditions, gain roll-off, antenna pointing errors, atmospheric attenuation, and CCI is further discussed below.

### 1. Gain Roll-Off

The pattern of cells on the surface of the earth is known as the cellular pattern of the satellite communication system. The cellular pattern in a modern satellite communication system may be defined on the surface of the earth such that the maximum gain of a satellite antenna beam is directed toward the center of its assigned cell. The boresight of a satellite antenna beam may be defined as the maximum gain point in the satellite antenna beam, and is typically directed to the center of a cell. The edge of a cell may be defined by determining the angular deviation from the antenna boresight at which the gain of the antenna beam drops to a predetermined value below the maximum gain value, typically at least 3 dB below the maximum gain value. The decrease in antenna beam gain with increasing angular deviation from boresight is known as gain roll-off. In terms of uplink power, a communications signal which is transmitted to the satellite from a UET located at the edge of a cell may be received by the satellite antenna with a gain which is at least 3 dB lower than the gain of a signal which is transmitted from a UET located at the antenna boresight, or center of the cell. Thus, the transmission power level of a terminal located at the edge of a cell must be at least 3 dB higher than that of a terminal located at the center of a cell in order to achieve the same level of performance. In other words, if the edge of a cell is defined as the angle from boresight at which the satellite antenna gain has decayed to 3dB below the maximum antenna gain at the boresight, a UET at the edge of the cell may need to use a transmission power level 3dB higher than a UET at the center of the cell in order to compensate for the reduced antenna gain at the edge of the cell. By transmitting at the 3dB higher transmission power level, the signal from the UET at the edge of the cell may be received at the satellite with a power that is approximately equal to the power of a signal from the UET at the center of the cell. In order to simplify and reduce the cost of uplink components installed on the satellite, it is desirable to maintain a similar received power level for each UET in the cell. Thus, it is desirable to modify the transmission power of each UET in the cell to compensate for any reduction in the antenna gain at each UET resulting from the UET's position within the cell.

### 2. Antenna Pointing Errors

In practice, the antenna beams of a cellular communication satellite are generally not directed precisely toward the centers of their assigned cells. Slight mis-orientations of the antenna boresights and deviations from a perfectly circular, zero-inclination satellite orbit give rise to pointing errors. These pointing errors may cause the location of the maximum gain of an antenna beam to deviate from the cell center. Some pointing errors may also cause the maximum gain of an antenna beam pattern to change measurably over the course of a day. In other words, the antenna beam gain distribution across the cell may change with time.

The antenna beam gain at the edge of a cell typically rolls off rapidly as the distance from the center of the cell increases, that is, as the angular deviation from boresight increases. Thus, a pointing error corresponding to only 10% of a cell diameter may cause the antenna beam gain at the edge of a cell to vary by 2 dB or more. Because it is desirable to maintain a similar received power for each UET in the cell, it is desirable to adjust the transmission power of each UET in the cell to compensate for antenna beam pointing errors.

### 3. Atmospheric Attenuation

Achieving satisfactory communication performance for a signal transmitted from a UET to a satellite generally depends upon receiving a requisite level of signal power at the satellite. That is, each user terminal must transmit a signal with sufficient power to be received. The relationship between the power of the signal transmitted by the terminal and the power of the signal received by the satellite receiver depends in part upon the amount of attenuation of the signal as it passes through the earth's atmosphere. At Ka-band frequencies, the amount of atmospheric attenuation varies considerably as meteorological parameters and weather patterns change. In particular, the occurrence of rain has a pronounced effect on the attenuation of a Ka-band communication signal. The attenuation of the communication signal is known as rain loss or rain fade, although other meteorological phenomena may also provide attenuation. Such atmospheric conditions and/or weather patterns may change rapidly and may vary among different UETs in a cell depending upon the UET's position within the cell. Because it is desirable to maintain a similar received power for each UET in the cell, it is desirable to adjust the transmission power of each UET in the cell to compensate for the attenuation experienced by the UET's signal due to rain loss.

### 4. Co-Channel Interference

Immediately adjacent cells in a cellular satellite communication system typically use different frequencies for transmitting signals. However, non-adjacent cells may use the same frequency. Such frequency re-use among cells within a cellular pattern serves to reduce the overall frequency bandwidth necessary for the satellite communication system. However, imperfections in satellite antenna beams such as, for example, sidelobe generation, may cause signals transmitted from a UET located in a first cell to be received by a satellite antenna beam which is assigned to receive signals from UETs located in a second cell which uses the same frequency as the first cell. Signals transmitted by UETs located in different cells but using the same frequency may thus interfere with each other, and may cause degraded communication performance. That is, a desired signal received by the satellite from a first UET may be interfered-with by signals from other UETs in other cells using the same frequency as the first UET. The interference from the other UETs may interfere with the desired signal and may adversely affect the performance of the communication system. The interference from other UETs is often referred to at Co-Channel Interference (CCI).

The ratio of the signal power received from the desired UET to the background noise is known as the signal-to-background ratio (SBR). The number of errors in a data signal received from a UET at a satellite (i.e., the error count) may be impacted by the SBR. The background may include thermal and other noise sources as well as interference sources such as interference from other UETs using the same frequency. In order for the satellite to receive a signal from a particular UET, the transmission power of the UET must be sufficient to provide at least a certain desired minimum SBR. As the background portion of the SBR increases with increasing CCI, the signal portion of the SBR is also increased to maintain the desired SBR. That is, the UET of interest transmits with increased transmission power to maintain the desired SBR in light of the increasing interference from other UETs. However, increasing the transmission power of the UET of interest raises the background level for the other UETs . The other UETs, also seeking to maintain the desired SBR, in turn respond by raising their transmission powers. The UET of interest may react by further increasing its power, and so on until all terminals in the system are operating at the maximum transmission power. This phenomenon is known as system runaway.

Satellite systems have been proposed that attempt to address the problem of system runaway by establishing a single, constant transmission power level for each UET. These proposed systems contemplated using frequencies in the range of 3 to 12 GHz (C or Ku band). Maintaining a constant power for each UET may be acceptable at C or Ku band frequencies in some cases. However, at higher, Ka-band frequencies (20-30 GHz), for example, attenuation alone may cause the power of the received signals at the satellite to vary over a range of 20 dB or more. A comparable dynamic range would be required of the satellite demodulator, which would have a dramatic impact on system complexity and cost. Additionally, such a system would produce a high degree of CCI and increased power consumption. Because of the high CCI, the maximum tolerable interference level from other UETs would unduly limit the number of UETs that may be used, and system capacity would be needlessly limited. Therefore, it is desirable to maintain satisfactory communication performance (typically, maintain a desired SBR and/or a desired error count) while preventing system runaway.

Additional complexity arises in an uplink power control system with regard to UETs which transmit data intermittently rather than continuously, or whenever a UET first establishes a communication channel for transmission to the satellite. When a UET initiates a transmission, the UET may be forced to send an uplink signal into an attenuation and interference environment substantially unknown to the UET. That is, the UET may not be able to transmit initially with a transmission power that provides the desired SBR while not providing needless CCI to other UETs using the same frequency. If the initial transmission power is set too low, the signal may not be received by the satellite. If the initial transmission power is set too high, it may add a disproportionate amount of CCI and degrade the quality (adversely impact the SBR) of other uplink signals in the system.

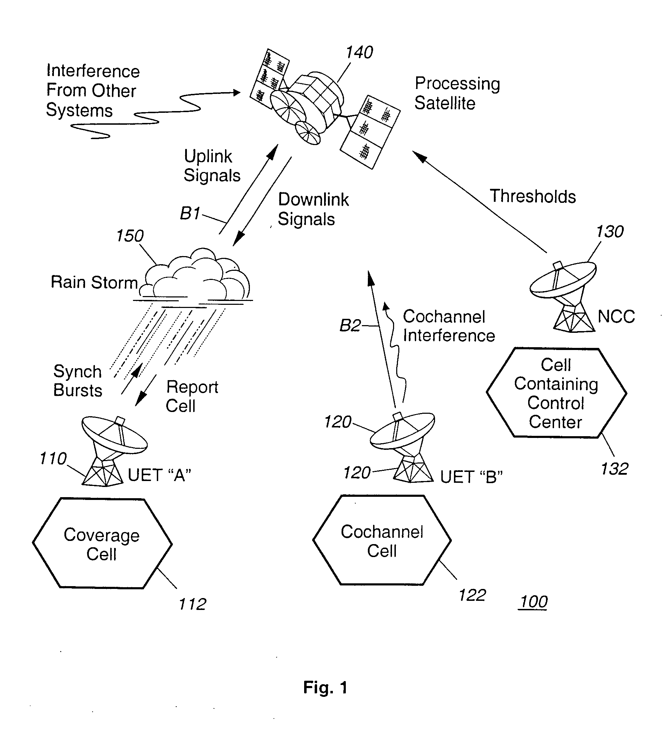

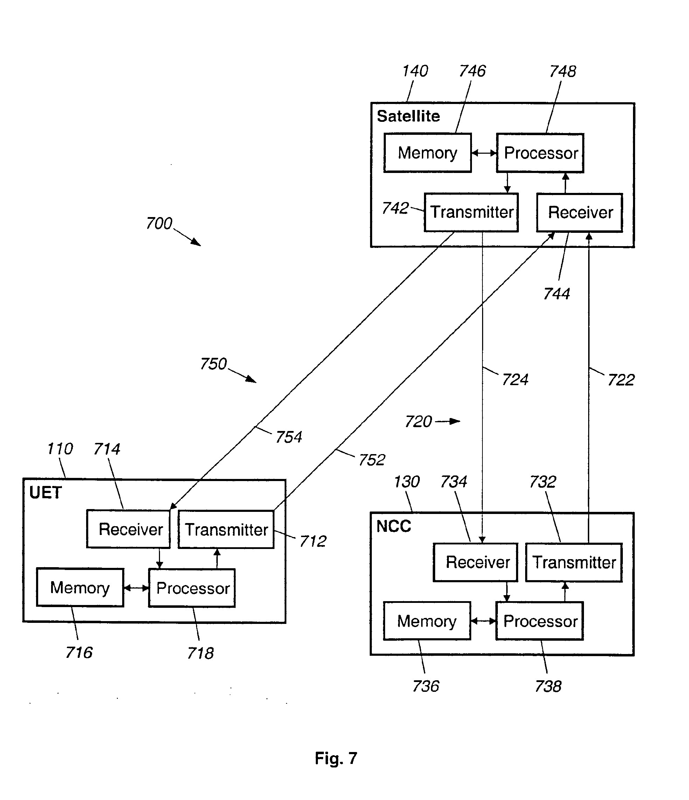

A pending application entitled "Comprehensive System and Method for Uplink Power Control In A Satellite Communication System", Application Serial No. 09/596,683, filed June 19, 2000, presented a method and means for controlling uplink transmission power in a satellite communication system to compensate for gain roll-off, antenna pointing errors, atmospheric attenuation, and co-channel interference. In operation, as shown in Figures 1 and 7, the uplink transmission power level used by a UET 110 for transmitting a traffic burst is continuously adjusted based on the number of errors detected and corrected for a prior traffic burst by the error detector/decoder 711 of a processing satellite 140. The success of the method depends upon the ability to determine a needed correction to the uplink transmission power for a traffic burst from a signal fidelity measurement made on a prior traffic burst. The method is therefore optimum only for systems utilizing a signaling scheme in which each UET transmits a large number of traffic bursts on a given assigned frequency channel and time slot. In this case, interference between UETs would vary slowly, and the transmission power level for a traffic burst may be reliably determined from a signal fidelity measurement made on a prior traffic burst. Some signaling schemes, however, may be characterized by large and rapid variations in interference between UETs. In the demand assigned multiple access (DAMA) signaling scheme, for example, a UET may be assigned a different frequency channel and time slot for each traffic burst to be transmitted, so that the level of interference experienced by any given traffic burst bears no relation to that experienced by any prior burst.

Since the frequency channel and time slot ("chanslot") assigned to a terminal for the transmission of traffic bursts may change from burst to burst in the demand assigned multiple access (DAMA) signaling scheme, it is not generally possible to determine the proper transmit power level for a traffic burst based on measurements of signal fidelity made on prior traffic bursts. It is therefore advantageous to overall system performance that the power leveling thresholds and traffic burst power offsets assume values which result in a high probability that the traffic bursts will be received by the satellite at or above a desired level of signal fidelity. At system turn-on, the thresholds and offsets may be assigned values based on theoretical analysis of expected system performance. In general, however, the optimum values of thresholds and offsets may not be known until the system is operational and the dependence of system performance upon these values may be observed. The values may be different for each beam due to differences in receiver electronics, and may change over the life of the system due to component degradation.

In a typical satellite communication system, uplink signals may be transmitted as a series of short bursts. A technique for determining the proper transmit power for an uplink burst from a given terminal might employ measurements of signal fidelity from prior bursts transmitted by the terminal. In a communication system which utilizes demand-assigned multiple access (DAMA) signaling, however, terminals may be assigned a new chanslot for transmission of each successive uplink burst. The amount of interference affecting an uplink signal will then vary from burst to burst, as the terminal producing the uplink signal as well as all terminals producing interfering signals are reassigned to different chanslots. A measurement of signal fidelity made on a prior burst may be inadequate for determining the proper transmit power for the next burst. If the time elapsed between transmission of uplink bursts by a given terminal is large enough, the atmospheric conditions affecting uplink signals as well as the satellite antenna gain due to mispointing may also vary from one burst to the next. Finally, a system which transmits more than one type of uplink signal by selecting between different coding rates must be capable of determining the proper transmit power for each type of coding employed.

Thus, a need has long existed for a system and method for controlling the uplink power in a satellite communication system. A need has especially existed for such a system and method able to control uplink power in an uplink channel affected by gain roll-off, antenna pointing errors, atmospheric attenuation, and CCI. Additionally, a need has long existed for a system and method for controlling the uplink power level such that traffic bursts may be received by a satellite at a desired level of signal fidelity when the interference environment is unknown or varying rapidly from burst to burst.

A technique for calibrating the values of thresholds and offsets used in uplink power control is desired which is based on observed system performance, which allows optimum values to be determined for each beam independently, and which automatically updates the values over the life of the system. This invention addresses these problems and provides a solution.

### BRIEF SUMMARY OF THE INVENTION

The preferred embodiment is useful in a satellite communication system comprising a satellite arranged to receive data carried by an uplink signal having a received power and a transmitter arranged to transmit the uplink signal at a transmit power. In such an environment, the uplink power preferably is controlled by comparing the received power of at least a portion of the uplink signal with a power threshold, adjusting the transmit power at least in part in response to the comparing, determining errors in the data and adjusting the power threshold in response to the determined errors. The comparing, adjusting the transmit power, determining and adjusting the power threshold preferably are carried out by one or more processors. By using the foregoing techniques, uplink power can be controlled effectively in the presence of DAMA signaling.

By using the foregoing techniques, interference between terminals in the system is minimized, and the required transmit power of each earth terminal is minimized. In addition, the system capacity is maximized.

### BRIEF DESCRIPTION OF THE DRAWINGS

Figure 1 illustrates a cellular satellite communications system according to a preferred embodiment of the power leveling aspect of the present invention.

Figure 2 illustrates a simplified block diagram according to a preferred embodiment of the power leveling aspect of the present invention.

Figure 3 illustrates a power leveling system according to a preferred embodiment of the power leveling aspect of the invention.

Figure 4 illustrates a selected power determination module of the synch burst processor according to a preferred embodiment of the power leveling aspect of the present invention.

Figure 5 illustrates exemplary ATM report cells according to a preferred embodiment of the power leveling aspect of the present invention.

Figure 6 illustrates a flow chart according to a preferred embodiment of the power leveling aspect of the present invention.

Figure 7 illustrates a block diagram of the satellite communication system shown in Figure 1 according to a preferred embodiment of the present invention.

Figure 8 is a flow chart illustrating a combined power leveling and threshold leveling technique according to a preferred embodiment of the present invention.

### DETAILED DESCRIPTION OF THE PREFERRED EMBODIMENTS

The preferred embodiment of the present invention provides a comprehensive system and method for uplink power control in a satellite communication system which utilizes DAMA signaling. The power leveling aspect of the preferred embodiment determines an uplink reference transmission power level by comparing the energy level of uplink signals received by a satellite from a terminal to a predetermined power leveling threshold. The transmission power level of the uplink signals is then adjusted up or down based on the comparison of the received energy with the threshold. Preferably, the energy level comparison is accomplished using synch bursts. If the satellite communication system uses multiple beams to provide communication to a number of geographically distinct regions (or "cells") on the earth, a separate predetermined threshold is preferably used for each beam of the satellite. When a terminal prepares to transmit data in a traffic burst, the uplink transmission power level is determined by adding a power offset value to the uplink reference power level. The power offset value is preferably based on the type of digital coding employed for transmitting data in the traffic burst. As each traffic burst is received and decoded by the satellite, the number of errors detected and corrected for that traffic burst is determined. The threshold leveling aspect of the preferred embodiment is then used to evaluate and control the power leveling thresholds and the power offset values. That is, periodically, the error counts for a number of traffic bursts are statistically analyzed. The power leveling thresholds for each beam and the power offset values for each type of digital coding employed are controlled based on the statistical analysis of the error counts.

A preferred embodiment of the present invention provides a comprehensive system and method for uplink power control in a satellite communication system which includes and synthesizes two interrelated concepts, namely power leveling and threshold leveling. Each of the power and threshold leveling aspects of the preferred embodiment is further discussed below. Additionally, the power leveling concept discussed in connection with the preferred embodiment of the present invention is further described in U.S. Patent Application Serial No. 09/596,671, filed June 19, 2000, entitled "Method and System for Controlling Uplink Power In a Satellite Communication System Using Power Leveling", the contents of which are incorporated herein by reference in its entirety. The threshold leveling concept discussed in connection with the preferred embodiment of the present invention is further described in U.S. Patent Application Serial No. 09/693,719, filed October 20, 2000, entitled "Satellite Communication System Threshold Leveling Techniques", the contents of which are incorporated herein by reference in its entirety.

Figure 1 illustrates a cellular satellite communications system 100 in which a preferred embodiment of the present invention may be employed. The satellite system 100 includes a first User Earth Terminal (UET), UET A 110, a second UET, UET B 120, a Network Control Center (NCC) 130, and a processing satellite 140. Both the UET A 110 and the UET B 120 may be mobile, but are preferably fixed terminals. The NCC 130 is preferably a fixed terminal. The UET A is positioned within a coverage cell 112, the UET B is positioned within a Co-Channel cell 122, and the NCC 130 is positioned within a NCC cell 132.

The UET A 110 and the UET B 120 are preferably linked by, and communicate with each other via the satellite 140. Both the coverage cell 112 and the Co-Channel cell 122 correspond to individual antenna beams of the satellite 140. Each individual antenna beam of the satellite 104 is preferably directed toward the center of the respective cell, and is assigned to receive signals originating from, and transmit signals directed to, all of the terminals located within that cell. The satellite communication system preferably uses frequency division multiple access (FDMA) in combination with time division multiple access (TDMA) for allocating available communication resources, such that each terminal within a given cell is assigned a frequency channel and one or more time slots for transmission of uplink signals. Terminals located in adjacent cells transmit uplink signals using different frequencies, while terminals in nonadjacent cells may use the same frequency. For example, the UET A 110 may use the same frequency as the UET B 120 for transmitting uplink signals to the satellite 140. Each channel/slot combination ("chanslot") is assigned to only one terminal in a given cell for transmission of uplink signals, while each terminal may be assigned one or more chanslots. Alternatively, the present invention may be implemented in many other types of satellite communication systems which use code division multiple access (CDMA), FDMA only, TDMA only, or any other combination of CDMA, FDMA, and/or TDMA. A preferred embodiment of the present invention is described in detail below in the context of a TDMA/FDMA system.

In operation, the UET A 110, transmitting inside the coverage cell 112, sends uplink signals, including synchronization bursts and traffic bursts, to the processing satellite 140 on a beam B1 as shown. The uplink signals propagate through free space from the UET A 110 to the satellite 140. As mentioned above, the power of the uplink signals received at the satellite 140 from the UET A 110 may be negatively impacted by several factors including the UET A's 110 location within the coverage cell 112, the presence of an atmospheric event such as a rain storm 150, pointing errors in the orientation of the transmission antenna of the UET A 110 and receiving antenna of the satellite 140, and Co-Channel Interference (CCI) from UET B 120 which sends uplink signals, including synchronization bursts and traffic bursts, to satellite 140 on a beam B2.

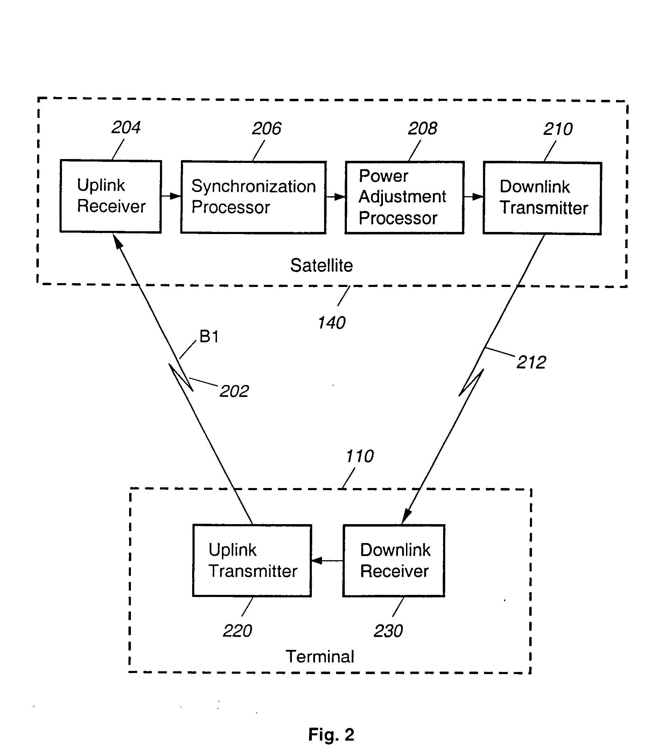

Figure 2 illustrates a simplified block diagram of a preferred embodiment of the power leveling aspect of the present invention which includes terminal 110 and satellite 140. Terminal 110 includes an uplink transmitter 220 and a downlink receiver 230. The satellite 140 includes an uplink receiver 204, a synchronization processor 206, a power adjustment processor 208 and a downlink transmitter 210.

In operation, terminal 110 periodically transmits a synchronization signal 202 on beam B1 to the satellite 140 via the uplink transmitter 220. The synchronization signal 202 is preferably composed of a predetermined sequence of binary digits and is typically used by the satellite 140 to estimate the timing error of the terminal 110. The synchronization signal 202 is received by the satellite 140 via the uplink receiver 204 and passed to the synchronization processor 206. The synchronization signal 202 and the synchronization processor 206 are further described in U.S. Patent Application Serial No. 09/408,965, filed September 29, 1999, entitled "Synchronization Method for a Processing Communication Satellite System", the contents of which are incorporated herein by reference.

As described further below, the preferred embodiment of the power leveling aspect of the present invention modifies the synchronization processor 206 so that the received signal is correlated with the predetermined threshold sequence and the total energy of the received correlated signal is measured. The measured total energy in general includes signal energy, interference, and thermal noise. When the synchronization sequence is of sufficient length (for example, a length of 64), then the contributions to total energy from interference and thermal noise are small compared with the contribution of the signal energy. Thus, the total energy of the correlated signal is approximately that of the signal energy.

The measured total energy value is input to a power adjustment processor 208, where it is compared with a predetermined threshold. The predetermined threshold represents the desired total energy level of the correlated signal, based on a desired communication performance level. In a multi-beam satellite system, a different threshold may be used for each beam. The power adjustment processor 208 calculates the difference between the threshold and the measured total energy and determines a power adjustment value. The power adjustment value is then sent from the satellite 140 to the UET 110 via the downlink transmitter 210. The UET 110 receives the downlink signal 212 via the downlink receiver 230. The UET 110 then uses the power adjustment value to adjust the transmission power level of the uplink transmitter 220.

In a first embodiment, the power adjustment value is the numerical value of the difference between the threshold level and the measured total energy. However, such a numerical value may require several bits to implement and thus may require transmission bandwidth that could otherwise be used for data.

In a second embodiment of the power leveling aspect of the present invention, the power adjustment processor 208 located within the satellite 140 determines only whether the measured total energy is greater or less than the desired threshold, rather than the actual numerical value of the difference. The transmission power level of the uplink transmitter 220 may then be raised if the measured total energy is less than the desired threshold or may be lowered if the measured total energy is greater than the desired threshold. In this preferred embodiment, the power adjustment value may be implemented as a single bit, thus minimizing bandwidth usage. The UET 110 may simply receive the single-bit adjustment value and then adjust the transmission power level of the uplink transmitter 220 up or down by a predetermined, fixed increment. The increments are preferably equal for the upward and downward adjustments, but need not be equal.

In a third, preferred embodiment of the power leveling aspect of the present invention, the power adjustment processor 208 determines whether the measured total energy is greater or less than the original desired threshold, as in the preferred embodiment above. Two additional thresholds are also established, one above the original threshold and one below the original threshold. The additional thresholds allow for the uplink power to be adjusted in one of four ways: big-step-up, little-step-up, little-step-down, and big-step-down. That is, first, if the measured total energy is below the original threshold and below the lower additional threshold, the transmission power of the uplink transmitter is adjusted upwards by a relatively large predetermined increment. Second, if the measured total energy is below the original threshold and above the lower additional threshold, the transmission power of the uplink transmitter is adjusted upwards by a smaller predetermined increment. Third, if the measured total energy is above the original threshold and below the upper additional threshold, the transmission power of the uplink transmitter is adjusted downwards by a small predetermined increment. Finally, if the measured total energy is above the original threshold and above the upper additional threshold, the transmission power of the uplink transmitter is adjusted downwards by a larger predetermined increment. As above, the increments are preferably equal for both the upward and downward adjustments, but need not be. Also, the larger predetermined increment is preferably about twice the smaller predetermined increment, but other values may be selected to accommodate the needs of specific communication systems. This embodiment may be implemented with a two-bit power adjustment value. Those skilled in the art will recognize that this embodiment may be scaled to larger numbers of thresholds to provide finer gradations of power control. However, implementing larger numbers of thresholds increases the number of bits required for the power adjustment value.

In a fourth embodiment of the power leveling aspect of the present invention, the power adjustment processor determines the value of the measured total energy relative to a plurality of thresholds as occurs in the third embodiment. However, in the fourth embodiment, the transmission power level of the uplink transmitter 220 is not adjusted up or down unless the measured total energy varies by a predetermined amount from the desired threshold. Thus, a lower threshold below the original threshold and an upper threshold above the original threshold are established. If the measured total energy is above the upper threshold, the transmission power of the uplink transmitter is adjusted downwards by a predetermined increment. If the measured total energy is below the lower threshold, the transmission power of the uplink transmitter is adjusted upwards by a predetermined increment. If the measured energy is between the upper and lower thresholds, the power of the uplink transmitter is not adjusted. This embodiment may also be implemented with a two-bit power adjustment value. Those skilled in the art will recognize that the fourth embodiment may be combined with the third embodiment.

In each embodiment, the power leveling aspect of the present invention provides a closed loop procedure for controlling the power level of an uplink signal using synchronization bursts. The energy level measurement is formed using the same correlated variables that are used to develop an early/late indicator from the synchronization bursts for each terminal. The present invention allows each terminal, whether actively engaged in transmitting data bursts or simply maintaining synchronization in a standby condition, to know the transmission power level needed for a transmitted signal to be received by the satellite. Because the desired transmission power level is known, the terminal is able to transmit data at a sufficient power level to ensure with high probability that it will be received by the satellite, regardless of the particular chanslot assigned to the terminal for transmission of data in a traffic burst. Although a terminal may be assigned different chanslots for each successive traffic burst used for the transmission of data, active transmission in each uplink chanslot may be initiated at a level that is neither so high as to induce undue cochannel interference in same color beams nor so low as to place the terminal's data content at risk of experiencing an excessive cell loss ratio.

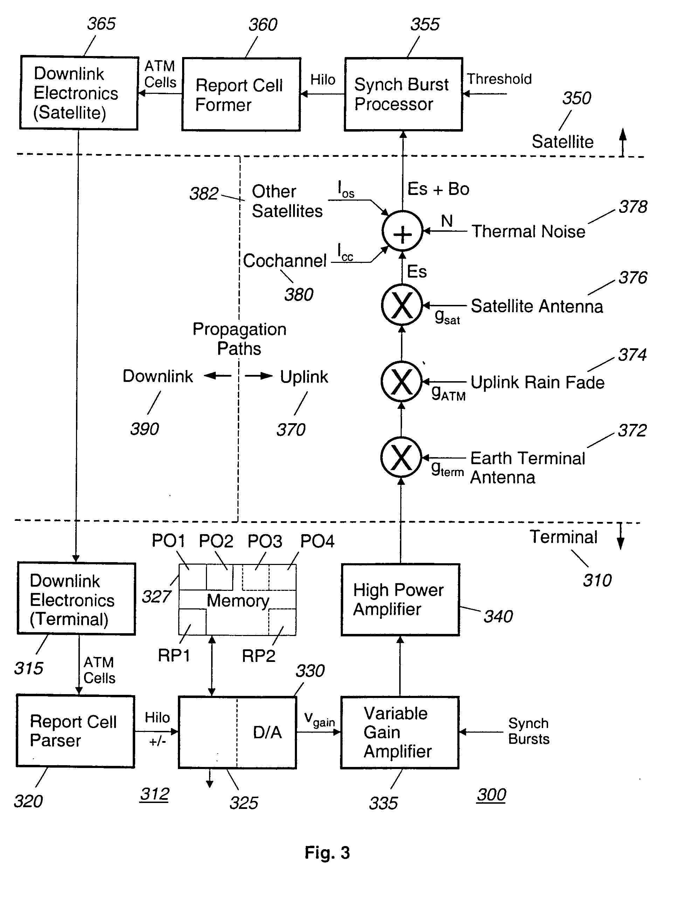

Figure 3 illustrates a power leveling system 300 according to a preferred embodiment of the power leveling aspect of the invention. System 300 is used in both terminal UETA 110 and UET B 120. The power leveling system 300 includes a terminal 310 and a satellite 350. The terminal 310 includes a downlink electronics module 315; a report cell parser 320; a digital memory 327; a processor 325; a digital to analog converter 330; a variable gain amplifier 335; and a high power amplifier 340. The satellite 350 includes a synch burst processor 355, a report cell former 360 and a downlink electronics module 365. Memory 327 stores values needed to change the power of the signals transmitted in beam B1, such as a power offset value PO1 for a first coding type, power offset value PO2 for a second coding type, and a reference power value RP1. Terminal UET B 120 has a like memory which stores a power offset value PO3 for the first coding type, a power offset value PO4 for the second coding type and a reference power value RP2 for beam B2 (shown in dotted lines in memory 327 (Fig. 3).

Figure 3 also includes an uplink 370 and a downlink 390. The uplink 370 may be negatively impacted by interference or attenuation as discussed above. For example, a signal transmitted by the terminal 310 to the satellite 350 first experiences a certain gain 372 from the antenna of the earth terminal. The gain of the antenna of the earth terminal may be negatively impacted by, for example, pointing errors as discussed above. The signal may then experience rain fade 374 which may attenuate the signal. The signal then experiences the gain 376 of the satellite antenna, which may also be negatively impacted by pointing errors. The signal may also experience interference from various sources including thermal noise 378, other satellites 382 and from Co-Channel terminals 380 (CCI) as discussed above. In other words, as the synch bursts propagate upwards and reach the satellite 350, they may be subjected to factors that may result in variations in the energy level reaching the satellite's synch burst processor 355. These include the orientation of both the terminal's and the satellite's antennas whose effective gain depends on the precision of aiming. For the satellite antenna, the gain also depends on the location in the beam of the earth terminal. Another variable is the earth's atmosphere which may introduce a significant amount of attenuation due to rain, clouds, or gaseous absorption.

In operation, the terminal 310 periodically sends synchronization bursts to the satellite 350 via the uplink 370. At the terminal, the synchronization bursts are supplied to the variable gain amplifier 335 and then passed to the high power amplifier (HPA) 340 for transmission to the satellite 350. As the synchronization bursts pass through the uplink 370, they may affected by the factors shown, (i.e., the earth terminal antenna gain 372, the uplink rain fade 374, the satellite antenna gain 376, thermal noise 378, and interference from other satellites 382 and CCI 380).

The synchronization bursts are sent at predetermined intervals regardless of whether the terminal 310 is in standby mode or is actively transmitting data traffic. In order for the synch bursts to be received by the satellite, the synch bursts must be transmitted at a sufficient power level. In operation, the variable gain amplifier 335 scales the amplitude of the signal it passes to the HPA 340. Because the HPA 340 is preferably a non-scalable amplifier, the scaled amplitude passed to the HPA 340 results in a scaled output power from the HPA 340. The output power of the HPA 340 is sufficient so that the synch burst will be received by the satellite 350 at or near a desired power level. Because of the interference present in the uplink 370,the signal received by the synch burst processor 355 from the terminal 310 includes both a desired signal component and an undesired background signal component.

In a typical satellite system, user terminals may transmit a short synchronization burst to the satellite every 0.75 seconds. The synchronization burst is of N symbols duration where N is typically 64. The signal structure of the burst is a fixed sequence with structure chosen for its ability to provide reliable time of arrival indications. Details of a typical synch burst are further disclosed in various related patent applications, including, U.S. Patent Application Serial No. 09/409,965, filed March 16, 1999, entitled "Synchronization Method for a Processing Communication Satellite", and U.S. Patent Application Serial No. 09/408,331, filed September 29, 1999, entitled "Uplink Transmission And Reception Techniques For A Processing Communication Satellite", the contents of which are incorporated herein by reference.

The processing of the synch bursts at the satellite 350 to determine an early/late indicator for the synch burst and the structure of the synch burst processor 355 are further disclosed in U.S. Patent Application Serial No. 09/408,261, filed September 29, 1999, entitled "Synchronization Burst Processor For A Processing Satellite", the contents of which is incorporated herein by reference. As set forth in the identified application, the synchronization burst processor (SBP) 355 determines early and late correlated responses R_{E} and R_{L}. The SBP 355 uses N+1 "odd" samples from the in-phase and quadrature components of an received synch burst. Odd samples are samples taken at a half symbol time offset from the point of convergence of the demodulator's eye diagram. In other words, odd samples are offset by half a symbol time from the usual data symbol rate.

The early correlated response, R_{E}, is determined from 64 odd samples offset by a half symbol time ahead. The late correlated response ,R_{L}, is determined from 64 odd samples offset by a half symbol time behind. Thus, because each is offset by half a symbol time, R_{L} and R_{E} overlap except as to their earliest and latest samples. Thus, N+1 or 65 odd samples are analyzed to determine R_{L} and R_{E}. Once R_{L} and R_{E} have been determined, the total energy of the correlated signal may be determined.

UET B 120 includes apparatus identical to the apparatus of UET A 110 described in connection with Figures 2 and 3, except that UET B 120 stores values PO3, PO4 and RP2 instead of values PO1, PO2 and RP1.

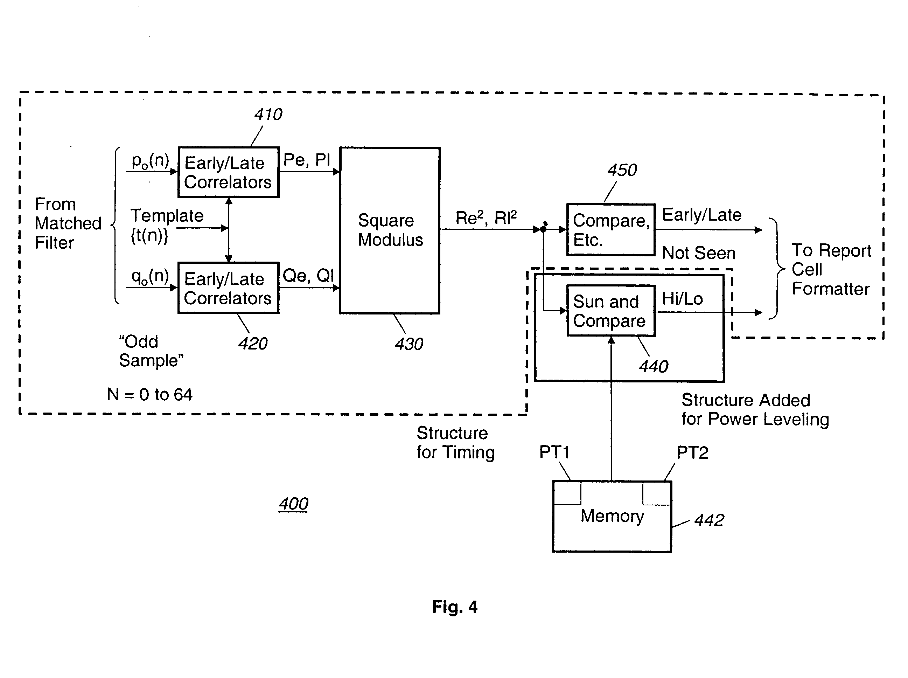

Figure 4 illustrates a selected power determination module 400 of the synch burst processor 355 in greater detail, according to a preferred embodiment of the present invention. The power determination module 400 includes an in phase early/late correlator 410, a quadrature early/late correlator 420, a square modulus 430, a power leveling sum-and-compare module 440, and a timing compare module 450.

In operation, a matched filter (not shown) provides an in-phase component of a received synch burst to the in-phase early/late correlator 410 and also provides the quadrature component of the received synch burst to the quadrature early/late correlator 420. A template t(n) of the synch burst is supplied to both the in phase and quadrature early/late correlators 410, 420 as shown. The in-phase and quadrature early/late correlators 410, 420 then correlate the odd samples of the synch burst with the template t(n) to determine an early and late correlation for both the in phase (P_{E} and P_{L}) and quadrature (Q_{E} and Q_{L}) components. Once the early and late correlations for both the in-phase (P_{E} and P_{L}) and quadrature (Q_{E} and Q_{L}) components of the odd samples of the synch burst have been formed, the early and late correlations are passed to the square modulus 430. The square modulus determines the total energy level of the early correlation by squaring and summing the in-phase and quadrature components of the early correlation. The total energy level of the late correlation is formed in the same way. The total energy values for the early correlation R_{E}² and the late correlation R_{L}² are sent to both the timing compare module 450 and the sum-and-compare module 440. The sum-and-compare module 440 adds the early and late energy values to determine the total energy E_{TOT} of the received synch burst. This total energy value is then compared with a threshold energy value to determine a transmission power adjustment.

The sum-and-compare module 440 retrieves from a memory 442 a power leveling threshold value for each received beam. For example, a power leveling threshold value PT1 may be stored for beam B1 and a power leveling threshold value PT2 may be stored for beam B2. The power leveling threshold values are read from memory 442 by processor 355 (Fig. 3). The determination of the threshold value is described in reference to the threshold leveling aspect of the present invention discussed below. The total energy of the received synch burst is then compared to the predetermined threshold. When a synch burst arrives at the SBP 355 with a higher energy level than the threshold, a signal may be sent to the user terminal to reduce the transmission power level. Conversely, when a synch burst arrives at the SBP 355 with a lower energy level than the threshold, a signal may be sent to the user terminal to increase the transmission power level.

The threshold level employed by the sum-and-compare module 440 of Figure 4 is independently determined and transmitted to the satellite as further discussed below with reference to the threshold leveling aspect of the present invention. Preferably, the threshold may be re-calibrated at a predetermined fixed period of approximately one hour. Also, preferably, the re-calibration of the threshold is performed at a Network Control Center (NCC) (not shown) and transmitted by the NCC to the satellite.

Once the sum-and-compare module 440 has determined whether the total energy, E_{TOT}, is less than or greater than the desired threshold value, the sum-and-compare module 440 may generate a one-bit hi/low indicator as shown. Alternatively, in the preferred embodiment, as described above, the total energy, E_{TOT}, is compared to the desired threshold, an upper threshold, and a lower threshold. The sum-and-compare module than generates a two-bit hihi/hi/lo/lolo indicator. That is, 1) when the total energy is less than the lower threshold, the lolo indicator is sent, 2) when the total energy is greater than the lower threshold but less than the desired threshold a lo indicator is sent, 3) when the total energy is lower than the upper threshold but greater than the desired threshold a hi indicator is sent, and 4) when the total energy is greater than the upper threshold, the hihi indicator is sent. The one-and two-bit hi/lo indicators are specific to the time slot and frequency channel of the user terminal's synch burst. Preferably, the hi/lo indicator for a terminal is combined with the sync information for that terminal to form a small report for that terminal. Preferably, the hi/lo indicator comprises two bits and the sync information also comprises two bits, thus yielding a four bit (one nibble) report for each terminal.

Referring to Figure 3, the hi/low indicator is then passed to the report cell former 360. The report cell former 360 packages the nibble report including the hi/low indicator for the terminal into a report cell. The report cell may be implemented in the form of an Asynchronous Transfer Mode (ATM) cell. The nibble report including the hi/low indicator may be packaged in the ATM cell with nibble reports including hi/low indicators for other terminals that may be transmitting sync bursts as further described below. The report cell former 360 then packs the nibble reports for each sync burst slot for the current frame into an ATM cell. The report cell former 360 then passes the ATM cell to the downlink electronics module 365 and then transmits the report cell over the downlink 390 to the downlink module 315 of the terminal 310 as described above. The downlink module 315 passes the ATM cell to the report cell parser 320.

The report cell parser 320 unpackages the ATM cell and determines the hi/low indicator from the report nibble for that specific terminal 310. The hi/low indicator is then passed to the processor 325. The processor 325 then adjusts the power reference value in memory 327 for the corresponding beam (e.g., RP1). For example, in the preferred embodiment of a two-bit hi/lo indicator, the value of RP1 might be adjusted in a 0.1 to 0.25 dB step size for a hi or lo report and in a .25 to .50 dB step size for a lolo or hihi report. That is, the binary hi/lo indicator is converted to bipolar (±1) form and added to the stored value of RP1 to produce a new, updated value of RP1 which is then stored in memory 327. The stored value constitutes the current reference power level for the terminal.

The reference power digital value (e.g., RP1) is converted to analog form by a D/A converter 330. The conversion factor between the digital value and its analog representation is scaled by the step size parameter in the earth terminal.

The analog voltage "Vgain" is used to control the gain of the variable gain amplifier 335 in the terminal's 310 transmitter chain. Preferably, the sense of correction of the gain of the variable gain amplifier is opposite to the error reported by the satellite. That is, if "hi" is reported then the amplifier gain is reduced so that a lower power synch burst is launched at the next master frame.

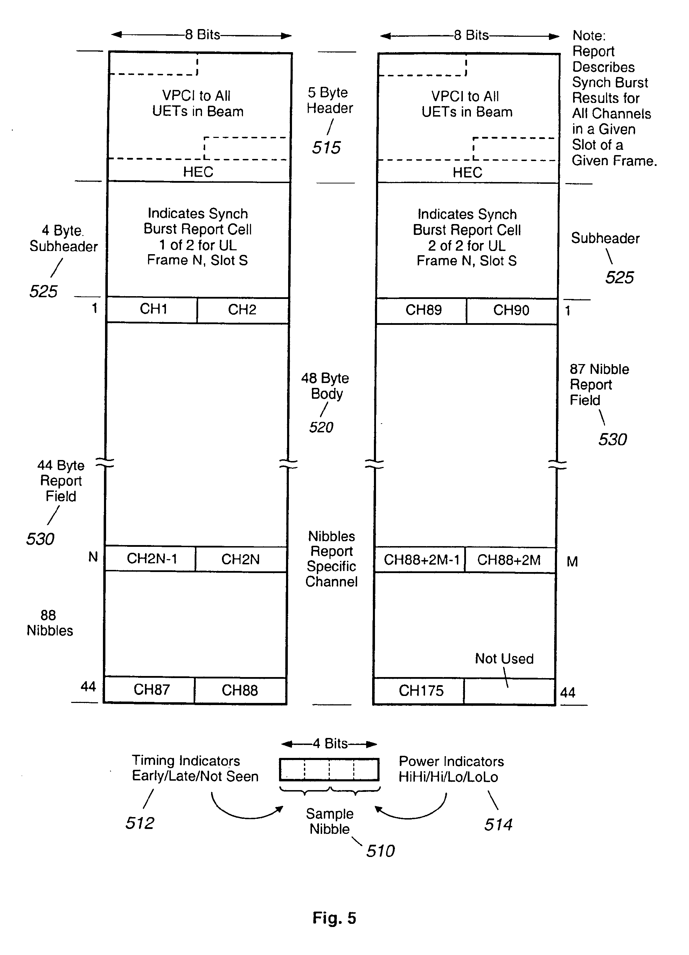

Figure 5 illustrates exemplary ATM report cells 500 according to a preferred embodiment of the power leveling aspect of the present invention. As described above, the preferred embodiment of the present invention employs a four-bit sample nibble 510 for each user terminal. The sample nibble includes a two-bit early/late timing indicator 512 and a two-bit power indicator 514. The preferred embodiment of the ATM report cells 500 relates to each specific synch burst slot in a specific uplink frame transmitted on a specific beam (e.g., beam B1 or beam B2) and reports the results for 175 separate (frequency divided) channels that may be accessed concurrently in the slot. The ATM report cells 500 are standard 53-byte ATM cells including a five-byte header 515 and a forty-eight byte body 520.

The header 515 includes ATM addressing (VPI and VCI) to all user terminals located in the satellite communication beam. Each UET monitors all ATM cells that arrive in its downlink. When ATM report cells 500 arrive, the ATM report cells 500 are passed to the UETs report cell parser 320 (Figure 3) for parsing.

The body of each ATM report cell 500 is divided into a four byte subheader 525 and a 44 byte report field 530. The subheader 525 contains fields to identify the cell as a synch burst report and to specify the uplink frame and the time slot to which the report refers. Since the synch burst report extends over two ATM report cells 500, there is also an indicator in the subheader 525 to differentiate the first and second cell of each report.

The report field of each synch burst ATM report cell 500 consists of two nibbles per byte (88 total in the first cell and 87 in the second) with each nibble being located in a position associated with its channel number. Because each UET knows the frame, slot, and channel in which its most recent synch burst was transmitted, the UET is able to identify the ATM report cells 500 that are relevant to it by comparing the terminal's frame and slot number to that of the ATM report cell. By comparing the terminal's channel to the ATM report cell 500, the terminal is also able to easily locate the nibble in the ATM report cell that pertains to the terminal's particular channel.

Thus, the preferred embodiment of the power leveling aspect of the present invention enables each terminal in the system, regardless of whether it is actively transmitting traffic bursts or simply maintaining synchronization while in a standby condition, to transmit at a power level that produces a received level at the satellite's synch burst processor which is close to predetermined threshold value. The predetermined threshold value is discussed in greater detail below in reference to the threshold leveling aspect of the invention. The preferred embodiment is efficient in its usage of satellite processing resources and also in any overhead requirements that it imposes on the communication resources between the satellite and the terminal. The preferred embodiment is also relatively insensitive to fluctuations in the level of the unwanted background that it experiences in the satellite receiving electronics.

The power leveling aspect of the present invention thus yields the ability to accurately maintain uplink power at a threshold level. In addition, the uplink power control may be fully integrated with the uplink timing reference control as described above. Also, no additional signaling between the terminal and the satellite is required because the present invention employs the synch bursts which are already sent to the satellite. Additionally, the preferred embodiment makes efficient use of the synchronization processes and adds minimal new hardware to the satellite.

Additionally, the preferred embodiment is unconditionally stable. System runaway is prevented because increases in background noise level do not result in the terminals raising their uplink transmission power. Also, the threshold reference level is easily scalable by uploading a new threshold level to the sum-and-compare module 440 of the satellite, as further discussed below in reference to the threshold leveling aspect. The preferred embodiment thus results in reduced interference between UETs within the system as well as between separate communication systems. The reduced interference permits reference levels to be held not far above theoretical minima, resulting in increased reserve margin at the user terminals, for a given HPA level. The reduction in reference level may reduce terminal costs by allowing the use of lower rated HPAs.

Also, the preferred embodiment permits the reference power level to be maintained by standby, as well as active, user terminals. Thus, UETs which transmit data intermittently, rather than continuously, may transmit at a certain desired threshold level. By regulating the initial UETs' uplink power level, the present invention may reduce CCI.

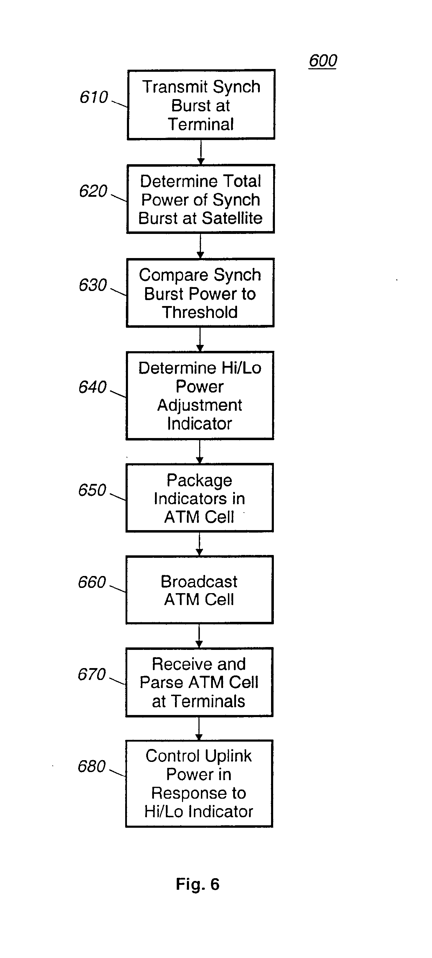

Figure 6 illustrates a flow chart 600 according to a preferred embodiment of the power leveling aspect of the present invention. First, at step 610, the terminal transmits a synchronization burst. Next, at step 620, the synch burst is received at the satellite and the total energy of the synch burst is determined. Then, at step 630, the total energy of the synch burst is compared to a threshold energy level. At step 640, a hi/lo power adjustment indicator is determined based on the comparison of the total energy of the synch burst to the threshold energy level. At step 650, the power adjustment indicators are packaged into ATM report cells. Next, at step 660, the ATM report cells are broadcast to the terminals. Then, at step 670, the ATM report cell is received and parsed, at the terminal, to determine the hi/lo power adjustment indicator for that terminal. The reference power value in the terminal's memory 327 is adjusted. Finally, at step 680, the uplink transmission power is controlled in response to the hi/lo power adjustment indicator.

Figure 7 illustrates a block diagram 700 of the satellite communication system 100 of Figure 1, according to an embodiment of the present invention. The block diagram 700 includes the NCC 130, satellite 140, and UET A 110 of Figure 1. The NCC 130 communicates with the satellite 140 via a NCC/Sat communication link 720. The NCC/Sat communication link 720 includes a NCC uplink 722 and a NCC downlink 724. The satellite 140 communicates with UET A 110 via a UET/Sat communication link 750. The UET/Sat communication link 750 includes a UET uplink 752 and a UET downlink 754.

UET A 110 includes a UET uplink transmitter 712 which is capable of sending synch bursts and traffic bursts over the UET uplink 752 as part of an uplink signal. The output power of the UET uplink transmitter 712 is adjustable in fine increments, and may be commanded to one level for synchronization bursts and one or more different levels for traffic bursts. UET A 110 also includes a UET downlink receiver 714 capable of receiving ATM cells which contain adjustments to the uplink reference power level RP1 or power offset values (e.g., PO1 and PO2) over the UET downlink 754. UET A 110 further includes a UET memory 716 which is capable of storing the uplink reference power level RP1 and, if UET A 110 employs more than one type of digital coding for the transmission of traffic bursts, one or more power offset values (e.g., PO1 and PO2). In addition, UET A 110 includes a UET processor 718 which is capable of extracting adjustments from received ATM cells, adjusting the stored uplink reference power level and power offset values, and determining transmit power levels for synch bursts and traffic bursts.

Satellite 140 is equipped with a satellite uplink receiver 744 which is capable of receiving synch bursts and traffic bursts from UET A 110 over the UET uplink 752, and which is also capable of receiving ATM cells containing adjustments to power leveling thresholds (e.g., PT1 and PT2) and power offset values (e.g., PO1 and PO2) over the NCC uplink 722. Satellite 140 is also equipped with a satellite memory 746 which is capable of storing one or more power leveling thresholds (e.g., PT1 and PT2). Satellite 140 is further equipped with a satellite processor 748 which includes an error-correcting decoder such as a Reed-Solomon decoder capable of decoding traffic bursts and providing error counts for the decoded traffic bursts. The satellite processor 748 is also capable of extracting power leveling threshold adjustments from received ATM cells, adjusting stored power leveling thresholds, determining average error rates from the error counts, and determining adjustments to uplink reference power levels (as described in connection with Figures 2-6), and is also capable of preparing report cells which contain error rate reports or adjustments to the uplink reference power levels. In addition, satellite 140 is equipped with a satellite downlink transmitter 742 which is capable of sending ATM cells containing adjustments to uplink reference power levels and power offset values over the UET downlink 754, and which is also capable of sending error report cells over the NCC downlink 724.

NCC 130 is equipped with a NCC downlink receiver 734 capable of receiving error report ATM cells over the NCC downlink 724. NCC 130 is also equipped with a NCC memory 736. NCC 130 is further equipped with a NCC processor 738 capable of determining adjustments to power leveling thresholds and power offset values based on the contents of the received cells, and is also capable of preparing report cells which contain the adjustments. In addition, NCC 130 is equipped with a NCC uplink transmitter 732 capable of sending ATM cells containing the adjustments over the NCC uplink 722.

As UET A 110 prepares to initiate a data transmission to the satellite 140, UET A 110 is assigned one or more chanslots for the transmission of data signals (or "traffic bursts") over the UET uplink 752. The NCC 130 preferably performs the chanslot assignment. The uplink power level used by UET A 110 for transmitting traffic bursts in each assigned chanslot may be determined by adding a fixed power offset value (e.g., PO1 or PO2) to the UET uplink reference power level RP1. The fixed offset value is stored in the UET memory 716 and typically depends on the type of digital coding employed for the transmission of data in a given chanslot. A satellite communication system which employs more than one type of digital coding for the transmission of traffic bursts may require that UET A 110 stores in its memory 716 a separate fixed offset value corresponding to each type of digital coding that differs from the type of coding employed for the transmission of synch bursts. If traffic bursts are transmitted using the same type of coding which is employed for the transmission of synch bursts (from which the UET uplink reference power level RP1 is derived), the offset value is typically zero. A satellite communication system which employs more than one type of digital coding for the transmission of traffic bursts is further described in U. S. Patent Application Serial No. 09/163,775 filed September 30, 1998, entitled "Adaptive Coding Scheme for a Processing Communication Satellite", the contents of which are incorporated herein by reference.

When a satellite communication system initially becomes operational, the power leveling thresholds stored in the satellite memory 746 and the power offsets stored in the UET memory 716 are typically assigned values based on expected system performance. In operation, however, the performance of the system may differ from expectation due to the unpredictable nature of background interference levels, the performance of digital decoding algorithms in an actual signal and interference environment, the performance of electronic components, and the degradation of these components over time. As a result, an undesired number of errors may be experienced when received data is decoded in the satellite processor 748. The present invention provides a method and means for maintaining the error rate of a received data stream at a desired level by automatically adjusting the power leveling threshold values and power offset values in response to an observed average error rate. In the case of a multi-beam satellite communication system, the present invention provides for a separate power leveling threshold value for each beam of the system to be maintained and automatically calibrated. The process of automatically adjusting the values of power leveling thresholds and power offsets based on observed system performance is referred to herein as threshold leveling.

Network control center 130 determines the adjustments to the power leveling thresholds and power offset values based on reports of signal fidelity provided by the satellite. As traffic bursts are received by satellite 140, they are decoded by the satellite processor 748 using an error-correcting decoder such as the Reed-Solomon decoder. The error-correcting decoder has the properties of correcting some number of bit errors in the received traffic burst and providing a count of the number of errors identified and corrected. The average number of errors that occurs in the traffic bursts may be used as a measure of signal fidelity.

The satellite prepares a report cell which contains the average number of errors corrected per traffic burst as well as the number of traffic bursts decoded for each beam and sends the report cell to network control center 130. The network control center receives the report cell and extracts the error counts and the number of bursts. The error counts are further averaged until the number of traffic bursts decoded exceeds a threshold, which may typically cover a period of time from one to several hours, and the network control center determines an average error rate for each beam. If the system employs more than one type of coding, the network control center determines a separate average error rate for each type of coding employed in each beam. The network control center then determines an adjustment to the power leveling threshold for each beam (e.g., B1 and B2). The threshold adjustment is based on the observed error rate for all traffic bursts which employ the same type of coding as the synchronization bursts. The threshold adjustment may be determined by means of a look-up table stored in the network control center's memory 736 which correlates a given observed error rate with a threshold correction value. The network control center may also determine adjustments to the power offset values for each beam. The offset adjustments are based on the observed error rates for each type of coding in a beam. The offset adjustments may also be determined by means of a look-up table (e.g., T1 or T2) stored in the network control center's memory 736. One table may be used for traffic bursts which are transmitted using a first type of digital coding (e.g., T1) and another table may be used for traffic bursts which are transmitted using a second type of digital coding (e.g., T2).

The network control center prepares a report cell which contains the power threshold adjustments for each beam and sends it to satellite 140. The satellite applies the adjustments to the current power threshold values (e.g., PT1 and PT2) and stores the new values in memory 746. The network control center also prepares a report cell which contains the power offset adjustments for each beam (e.g., B1 and B2) and sends it via satellite 140 to all terminals (e.g., 110 and 120). Each terminal extracts the adjustments appropriate to its assigned beam, applies the adjustments to the current power offset values (e.g., PO1 and PO2 for terminal 110 and PO3 and PO4 for terminal 120), and stores the new values in memory (e.g., memory 716).

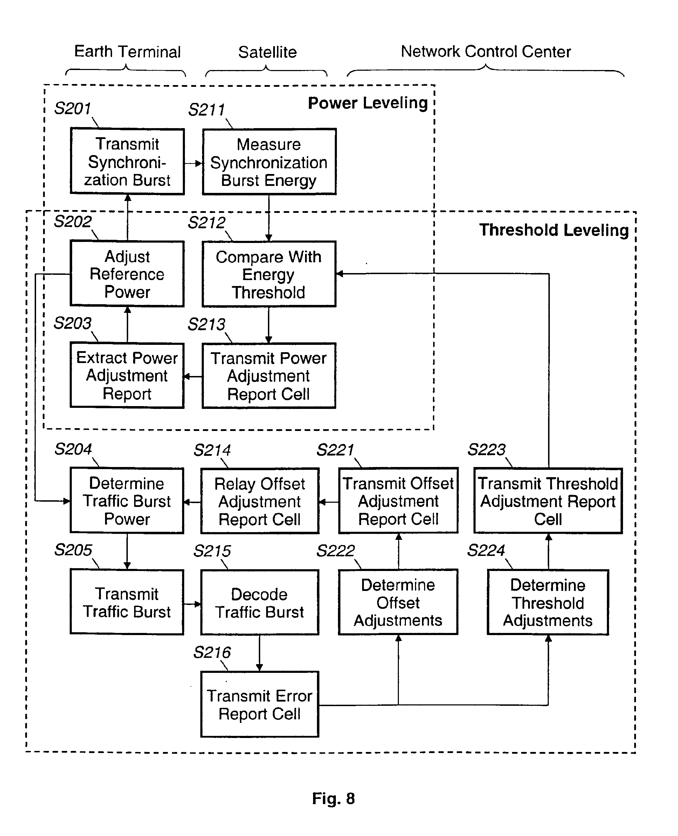

Figure 8 is a flow diagram illustrating the general sequence of steps associated with a comprehensive power control method for a processing communication satellite according to the preferred embodiment. In step S201, an earth terminal (e.g., 110) periodically transmits synchronization bursts which are used by satellite 140 to estimate the timing error of the terminal. The power level of a synchronization burst which is received by the satellite may vary with time due to changing atmospheric conditions or changes in the pointing of the satellite antenna. In step S211, satellite 140 measures the received energy level of the synchronization burst. In step S212, satellite 140 compares the measured energy level with a threshold (e.g., PT1 or PT2) representing a desired level of received energy. Similar functions are performed on synchronization bursts received from all other terminals. The satellite then prepares and transmits a report cell, as shown in step S213, which contains adjustments to the transmit power levels of all earth terminals in the system. In the preferred embodiment, the adjustment for a given terminal may be a 1-bit high/low indicator which signifies that the transmit power for synchronization bursts should be increased or decreased by a fixed increment.

In step S203, the terminal (e.g., 110) receives the report cell and extracts the power adjustment pertaining to its synchronization burst. In step S202, the terminal adjusts its uplink reference power level RP1 based on the contents of the report. In the preferred embodiment, the uplink reference power level is typically adjusted up or down by a fixed increment of 0.25 dB. The adjusted uplink reference power level RP1 is then used as the transmit power level for the next synchronization burst, and may be used for determining the transmit power level to be used for a traffic burst.

In step S204, earth terminal 110 determines a power level for transmitting a traffic burst by using the reference power level RP1 established in step S202. If the traffic burst is to be transmitted using the same type of coding as the synchronization bursts, the transmit power level for traffic bursts is the same as the reference power level. If the traffic burst uses a different type of coding than the synchronization bursts, the terminal accesses a power offset value stored in memory which corresponds to the type of coding to be used. The power offset value (e.g., PO2) is added to the reference power level RP1 to form the transmit power level for a traffic burst. In step S205 the traffic burst is transmitted to the satellite. The foregoing steps have been described in connection with terminal 110, but terminal 120 operates in an analogous manner.

In step S215, the traffic burst is received by satellite 140 and is decoded in the satellite processor 748 by means of an error-correcting decoder, such as the Reed-Solomon decoder, which also provides a count of the number of errors corrected. In step S216, the average number of errors per burst and the number of bursts decoded are placed into error report cells which are then transmitted to network control center 130. In step S224, the network control center uses the contents of the error report cells to determine adjustments to the power thresholds relevant to each beam (e.g., PT1 for beam B1 and PT2 for beam B2). In step S223, the power threshold adjustments are placed into adjustment report cells which are then transmitted to satellite 140. The satellite uses the adjustments to update the threshold values (e.g., PT1 and PT2) which are stored in the satellite's memory 746. The new power thresholds will be used to determine adjustments to the transmit power of subsequent synchronization bursts. In step S222, the network control center uses the contents of the error report cells to adjustments to the power offsets (e.g., PO1 or PO2). In step S221, the power offset adjustments are placed into an offset report cell which is then transmitted to satellite 140. In step S214, the offset adjustment report is received by the satellite and relayed to the terminals. Each terminal uses the adjustments pertaining to its assigned beam (B1 for terminal 110 and B2 for terminal 120) to update the offset values which are stored in the terminal's memory. The offsets will be used to determine the proper transmit power for subsequent traffic bursts.

While particular elements, embodiments and applications of the present invention have been shown and described, it is understood that the invention is not limited thereto since modifications may be made by those skilled in the art, particularly in light of the foregoing teaching. It is therefore contemplated by the appended claims to cover such modifications and incorporate those features which come within the spirit and scope of the invention. For example, the processing needed to generate signals PO1, PO2, PO3, PO4, RP1, RP2, PT1 and PT2 and the storing of such signals could be done at one location and the signals could be transmitted as part of a data stream at an appropriate time to the locations where needed.

## Claims

1. In a satellite communication system comprising a satellite arranged to receive data carried by an uplink signal having a received power and a transmitter arranged to transmit said uplink signal at a transmit power, an uplink power control method comprising:
comparing the received power of at least a portion of said uplink signal with a power threshold;
adjusting the transmit power at least in part in response to said comparing; determining errors in said data; and
adjusting said power threshold in response to said determined errors.

2. The uplink power control method of claim 1, comprising:
adjusting said transmit power at least in part in response to said determined errors in said data.

3. The uplink power control method of claim 1 or 2 to being carried out in a satellite communication system comprising a satellite arranged to receive data of a first type and a second type carded by an uplink signal having a received power and a transmitter arranged to transmit said uplink signal at a transmit power formed by a reference power combined with an offset power, said method comprising:
comparing the received power of at least a portion of said uplink signal with a power threshold;
adjusting the offset power of said transmit power at least in part in response to said comparing;
determining errors in said first and second types of data;
adjusting said power threshold in response to said determined errors; and
adjusting the offset power of said transmit power to a first value in response to determined errors in said first type of data and adjusting said offset power to a second value in response to determined errors in said second type of data.

4. The method, as claimed in claim 1 and 3, wherein said adjusting said offset power comprises addressing a look up table, and/or wherein said determining errors comprises:
determining error counts of said errors;
determining an average error rate in response to said error counts; and
adjusting said power threshold in response to said average error rate.

5. A method, as claimed in claim 1 wherein said transmit of said uplink signal comprises transmit of a synchronization signal and transmit of a data signal carrying said data and wherein said comparison is made using said synchronization signal.

6. Uplink power control apparatus for use in a satellite communication system of the type where a satellite receives data carried by an uplink signal having a received power, comprising:
a transmitter arranged to transmit said uplink signal at a transmit power; and
a processor arranged to make a comparison of the received power of at least a portion of said uplink signal with a power threshold, adjust the transmit power at least in part in response to said comparison, determine errors in said data and adjust said power threshold in response to said determined errors.

7. Apparatus, as claimed in claim 6,wherein said processor is arranged to:
determine error counts of said errors;
determine an average error rate in response to said error counts; and
adjust said power threshold in response to said average error rate.

8. Apparatus, as claimed in claim 6 or 7, wherein said uplink signal comprises a plurality of data signals and wherein said processor is arranged to:
determine a total number of errors by summing said error counts for said plurality of data signals; and
divide the total number of errors by the number of data signals in said plurality of data signals.

9. Apparatus, as claimed in claim 6, wherein said transmitter is arranged to transmit a synchronization signal and to transmit a data signal carrying said data and
wherein said comparison is made using said synchronization signal.

10. Apparatus, as claimed in claim 6, wherein said processor further is arranged to adjust said transmit power at least in part in response to said determined errors.
